# EUROPÄISCHE PATENTSCHRIFT

(11) **EP 3 665 442 B1**
(45) Veröffentlichungstag und Bekanntmachung des Hinweises auf die Patenterteilung: **01.09.2021**
(21) Anmeldenummer: 18752147.1
(22) Anmeldetag: 07.08.2018
(51) Int. Cl.: G01F 1/66, C09D 5/00, C09D 5/16

(54) **DURCHFLUSSMESSER**
FLOW METER
DÉBITMÈTRE

(30) Priorität: 08.08.2017 DE 102017118020
(43) Veröffentlichungstag der Anmeldung: 17.06.2020
(73) Patentinhaber: GWF MessSysteme AG, 6002 Luzern (CH)
(72) Erfinder: HELFENSTEIN, Markus, 6004 Luzern (CH)
(74) Vertreter: Winter, Brandl - Partnerschaft mbB
(86) Internationale Anmeldenummer: PCT/EP2018/071396
(87) Internationale Veröffentlichungsnummer: WO 2019/030227

(56) Entgegenhaltungen:
- EP-A1- 0 392 294
- WO-A1-2008/025538
- CN-U- 202 693 159
- US-B2- 8 939 034

## Beschreibung

Die Erfindung betrifft einen Durchflussmesser zur Messung des Durchflusses von Fluiden in einer Rohrleitung oder dergleichen gemäß dem Oberbegriff des Patentanspruches 1, sowie einen für einen derartigen Durchflussmesser geeigneten Reflektor.

In der EP 2 306 160 A1 ist ein Durchflussmesser/Durchflusszähler offenbart, bei dem der Messeinsatz sowohl die Ultraschall-Wandler aufnimmt als auch den eigentlichen Messkanal ausbildet. Dabei taucht durch eine von einem Flansch umgegriffene Ausnehmung des Rohrstückes ein den Messkanal ausbildender Profilkörper ein, der die Strömung innerhalb des Messbereiches beeinflusst und an dem zusätzlich Reflektoren für die Messsignale vorgesehen sind.

Eine ähnliche Lösung ist in der EP 2 386 836 B1 gezeigt. Die Strömungsführung innerhalb des Messkanals wird durch einen von der Stirnseite des Gehäuses her einsetzbaren Gehäuseeinsatz bestimmt, der auch Reflektoren für die Ultraschallsignale trägt, so dass der Ultraschall von einem der Ultraschall-Wandler abgegeben und über die Reflektoren zu dem anderen, beispielsweise stromabwärts gelegenen Ultraschall-Wandler reflektiert wird. Selbstverständlich kann die Signalführung auch in umgekehrter Richtung erfolgen.

In der Druckschrift EP 0 890 826 B1 ist ein Durchflussmesser beschrieben, bei dem ebenfalls im Bereich eines Rohrstückes eines Gehäuses ein Messeinsatz an einen tangential verlaufenden Flansch angesetzt wird. Die Ultraschallenergie wird durch mehrere am Boden, an den Seitenwänden und an dem Deckel des Einsatzes befestigten Reflexionsflächen wendelförmig umgelenkt. Es sind mehrere Einsätze aus Kunststoff vorgesehen um die Reflektoren aufzunehmen und mit hoher Genauigkeit zu positionieren.

Der Druckschrift CN 202 693 159 U offenbart ein Durchflussmessgerät wobei die Reflektoren ablagerungsresistente Oberflächenstruktur aufweisen.

Nachteilig bei derartigen Lösungen ist, dass sich durch Partikel, Sedimente und ähnliche Bestandteile im Fluid Ablagerungen auf dem Reflektor bilden können, was zu einer Verschlechterung der Signalqualität führen kann.

Demgegenüber liegt der Erfindung die Aufgabe zugrunde, einen Durchflussmesser/Durchflusszähler und einen Reflektor zu schaffen, die eine Messung mit verbesserter Messgenauigkeit und einer verbesserten Signalqualität erreichen.

Diese Aufgabe wird hinsichtlich des Durchflussmessers mit den Merkmalen des Patentanspruches 1 gelöst.

Vorteilhafte Weiterbildungen der Erfindung sind Gegenstand der Unteransprüche.

Der vorzugsweise bündig eingesetzte Reflektor verfügt über eine Reflexionsfläche, deren Oberflächenstruktur derart ausgebildet ist, dass Schmutzablagerungen, die trotz verminderter Verwirbelungen und Strömungsabrisse auftreten könnten, keine Angriffsfläche geboten wird. Bei sehr geringem Durchflussvolumenstrom und damit einhergehenden langsamen Strömungsgeschwindigkeiten werden Schmutzablagerungen in Form von Sedimenten und/oder anderen Schwebepartikeln im Fluid, gravitationsbedingt an der reflektorseitigen Querwandung des Messkanals abgelagert, sofern die reflektorseitige Querwandung in Schwerkraftrichtung angeordnet ist. Durch die Beschaffenheit der Oberfläche des Reflektors wird eine Ablagerung auf diesem, selbst bei niedrigen Strömungsgeschwindigkeiten, nahezu unmöglich, so dass eine Reflexion der Messsignale und eine damit einhergehende hohe Signalqualität permanent gewährleistet sind. Um den Ablagerungen weiter entgegen zu wirken, könnte der gesamte Messkanal entlang der Achse der Flussrichtung verschwenkt sein, so dass die reflektorseitige Querwandung nicht in Schwerkraftrichtung liegt.

Gemäß eines bevorzugten Ausführungsbeispiels der Erfindung ist an der von den Ultraschall-Wandlern entfernten Querwandung ein Reflektor angeordnet, der vorzugsweise bündig in eine Tasche der Querwandung eingesetzt ist. Durch das bündige Einsetzen des Reflektors/Spiegels und/oder der Sensoren/Koppelstücke in den Messkanal werden Verwirbelungen und Strömungsabrisse im Bereich dieser Komponenten und eine damit einhergehende Schmutzablagerung und die daraus resultierende Signalverfälschung verhindert. Es ist auch denkbar, dass mehr als ein Reflektor im Messkanal angeordnet ist. Eine Anordnung von drei Reflektoren, zwei an der den Sensoren gegenüberliegenden Querwandung und einer zwischen den Sensoren, so dass ein W-förmiger Signalpfad ausgebildet wird, ist zur Verlängerung des Signalpfades und damit zur Erhöhung der Messgenauigkeit, anwendbar.

Zur Verbesserung der Ablagerungsresistenz ist die Oberflächenstruktur vorzugsweise bionisch ausgebildet. Eine derartige Ausbildung bringt in den Bereichen Reibung, Abnutzung, Schmierung, Benetzung, Selbstreinigung und Antifouling Vorteile mit sich. Erstaunlicherweise hat sich herausgestellt, dass im Vergleich zu eine glatten Oberfläche, eine speziell strukturierte Oberfläche nach biologischen Vorbild (bionisch), die gewünschten Funktionen wie die Ablagerungsresistenz, erzielt und dabei weiterhin eine hinreichende Reflexion gewährleistet. Die Oberflächenstruktur kann auch an einer Beschichtung des Reflektors ausgebildet sein.

Ein Ausführungsbeispiel einer bionischen Oberfläche stellt eine Oberfläche mit dem Haifischhaut-Effekt (Ribleteffekt) dar. Eine derart ausgebildete Oberfläche reduziert den Widerstand in Fluiden nachhaltig und verhindert Ablagerungen sowie Anwachsungen von Organismen jeglicher Art (Antifouling). Der Haifischhauteffekt wird u.a. durch Mikro-Längsrillen auf der Oberfläche hervorgerufen. Idealerweise sind diese in Form von Blades ausgebildet und stehen senkrecht auf der Oberfläche. Aber auch eine vereinfacht herstellbare Form als eine Art Wellenprofil (scalloped) bringt den gewünschten Effekt. Das Verhältnis zwischen Höhe der Längsrillen und deren Abstand ist abhängig von der Durchflussgeschwindigkeit des umströmenden Fluids und sollte zwischen 0,4 und 0,9, idealerweise im Bereich von 0,7 liegen, wenn die Durchflussgeschwindigkeit 5 m/s beträgt. In dieser Ausführungsform liegen die Rippenhöhe (h) bei 50µm und der Rippenabstand (s) bei 70µm.

Ein weiteres Ausführungsbeispiel einer bionischen Oberfläche ist eine Oberfläche mit Lotus-Effekt, das heißt, dass die Oberfläche mit einer superhydrophoben Schicht versehen ist, auf der die Kontaktfläche eines Fluides nur wenige Prozent der Fluidoberfläche ausmacht. Dieser Effekt wird durch strukturelle Erhebungen in der bionischen Oberfläche geschaffen, die eine Reflexion der Ultraschallwellen nicht beeinträchtigen.

Eine weitere geeignete Variante einer bionischen Oberfläche ist eine Oberfläche mit Reisblatt-Effekt, das heißt, dass in Fließrichtung des Fluides unterschiedliche hohe Erhebungen auf der Oberfläche platziert sind. Diese sind quer zur Fließrichtung angeordnet, wobei die einen Erhebungen halb so hoch sind wie die anderen und sich, bei gleichem Durchmesser, vom Mittelpunkt einer Erhebung aus betrachtet zum Mittelpunkt der nächsten Erhebung, um den doppelten Durchmesser beabstandet voneinander befinden.

Bei einem erfindungsgemäßen Durchflussmesser sind die in Richtung einer Hochachse (in etwa in Sende- und Empfangsrichtung der Ultraschallsignale) verlaufenden Seitenwandungen eines Messkanals ausgewölbt und bilden mit etwa in Richtung der Querachse verlaufenden, in etwa planen oder leicht ausgewölbten Querwandungen eine Ovalform aus. Es zeigte sich überraschenderweise, dass eine derartige Ovalgeometrie eine optimale Strömung und eine damit einhergehende maximale Signalqualität gewährleistet.

Die zuvor beschriebenen bionischen Oberflächen sind im Hinblick auf ihre Funktion als Ultraschallreflektoren optimiert.

Bevorzugte Ausführungsbeispiele der Erfindung werden im Folgenden anhand schematischer Zeichnungen näher erläutert. Es zeigen:
Figur 1 zeigt ein Ausführungsbeispiel eines Durchflussmessers mit einem Reflektor;
Figur 2 stellt eine schematische Darstellung eines Reflektors dar;
Figur 3 zeigt schematisch eine Oberflächenstruktur mit Haihaut-Effekt;
Figur 4 eine schematische Darstellung einer Oberflächenschicht, die den Reisblatt-Effekt erzeugt;
Figur 5 eine schematische Darstellung einer Reflektoroberflächenschicht, mit einer Kombination aus Haihaut- und Reisblatt-Effekt.

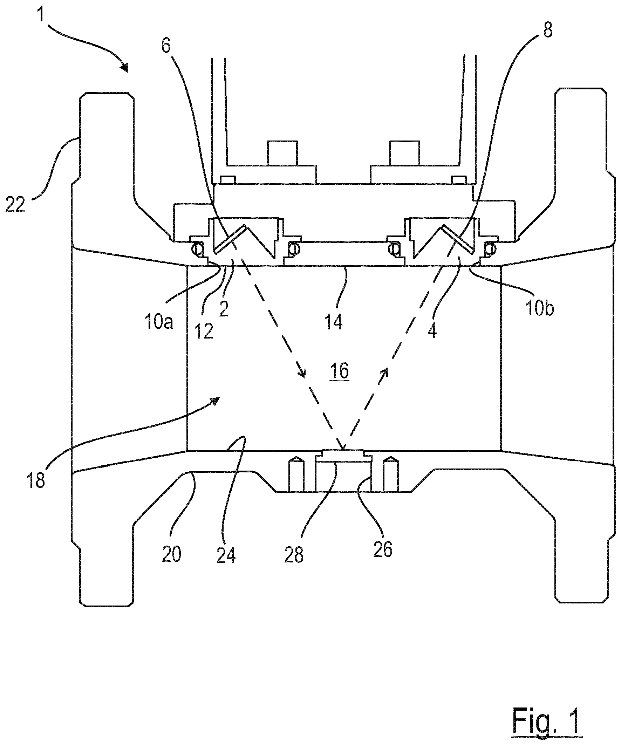

Figur 1 zeigt einen Längsschnitt eines Durchflussmessers 1. Man erkennt in dieser Darstellung zwei Koppelstücke 2, 4, mit zwei Sensoren 6 bzw. 8. Diese sind jeweils in zwei Ausnehmungen 10a, 10b eingesetzt. Die Koppelflächen 12 verlaufen bündig zur Umfangswandung (Querwandung 14 und angrenzende Bereiche von Seitenwandungen 16) eines Messkanals 18, der bei diesem Ausführungsbeispiel durch ein Rohrstück 20 ausgebildet ist. Ein Teil eines Flansches 22 bildet somit die Querwandung 14 aus. Eine gegenüberliegende Querwandung 24 ist bei diesem Ausführungsbeispiel mit einer nach außen hin offenen Tasche 26 ausgebildet, in die ein Reflektor 28 eingesetzt ist.

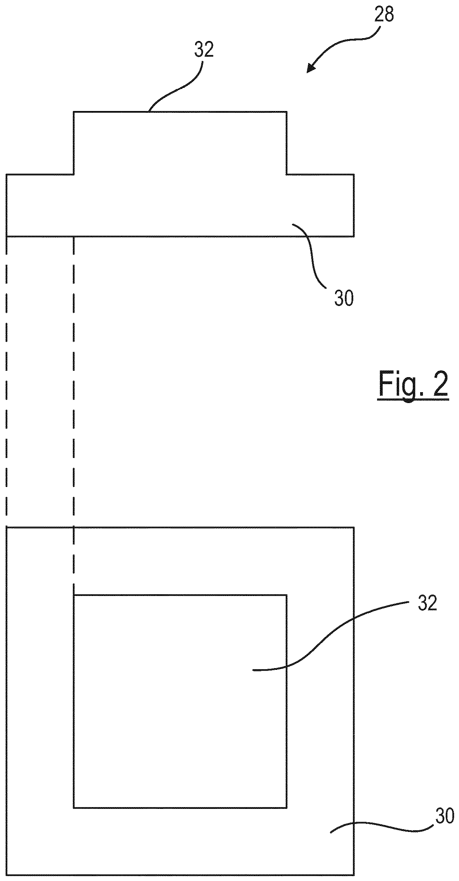

Figur 2 zeigt ein mögliches Ausführungsbeispiel des Reflektors 28 in dem Messkanal 18 nach Figur 1. In einer solchen Ausführung wird der Reflektor 28 in die Tasche verpresst. Daher ist eine Ausbildung des Reflektors 28 mit einer Grundfläche 30 vorgesehen. Bei einer anderen Einsatzform kann die Form anderweitig ausgeführt sein. Von besonderer Bedeutung ist, dass es sich bei dem Grundmaterial des Reflektors 28 um ein Material handelt, das Ultraschall gut reflektiert. Hier ist beispielsweise eine stahlhaltige oder auch eine polymerische Struktur nutzbar, wobei auch jedes andere Material, das Ultraschall gut reflektiert, denkbar wäre. Auf diesem Grundmaterial wird eine Oberflächenschicht 32 aufgebracht. Die Oberflächenschicht 32 ist ablagerungsresistent ausgebildet, worauf in den folgenden Figuren weiter eingegangen wird.

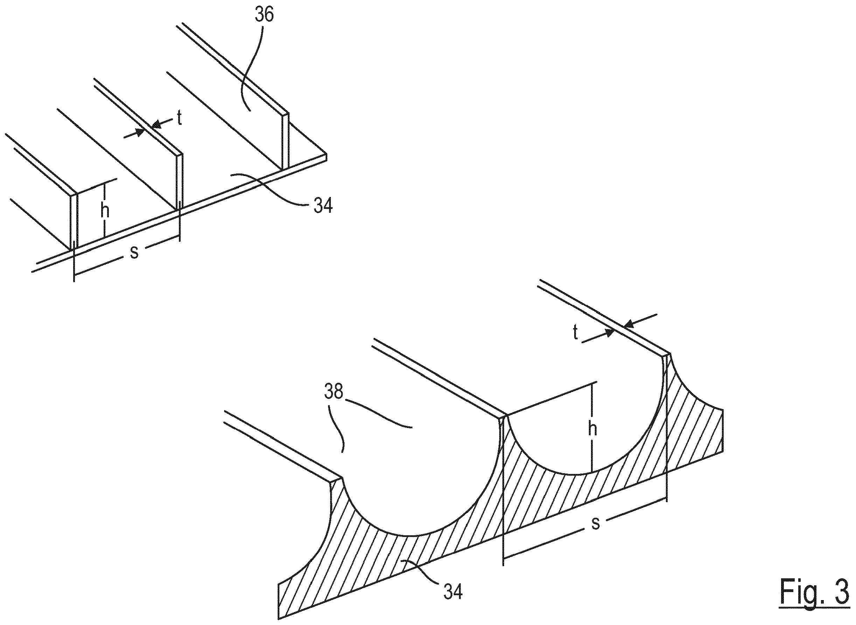

Figur 3 stellt schematisch dar, wie eine Oberfläche mit dem Haihaut-Effekt ausgebildet werden kann. Auf einer Grundfläche 34 werden Mikro-Längsrillen 36 geschaffen. Diese Längsrillen zeichnen sich durch eine gleichmäßige Höhe h und Breite t aus. Der Abstand s zueinander ist ebenfalls über die gesamt Fläche identisch. Diese Mikro-Längsrillen 36 können beispielsweise durch mechanische Bearbeitung des Grundmaterials 34, oder durch ein sehr feines Guss- oder Spritzgussverfahren auf das Grundmaterial 34 aufgetragen werden. Bedingt durch die Filigranität der Struktur ist fertigungstechnisch eine Wellenstruktur 38 mit gleichen Abmessungen kostenreduziert herstellbar. Die Reflexion und die Ablagerungsresistenz sind bei Rillen in Wellenstruktur 38 uneingeschränkt.

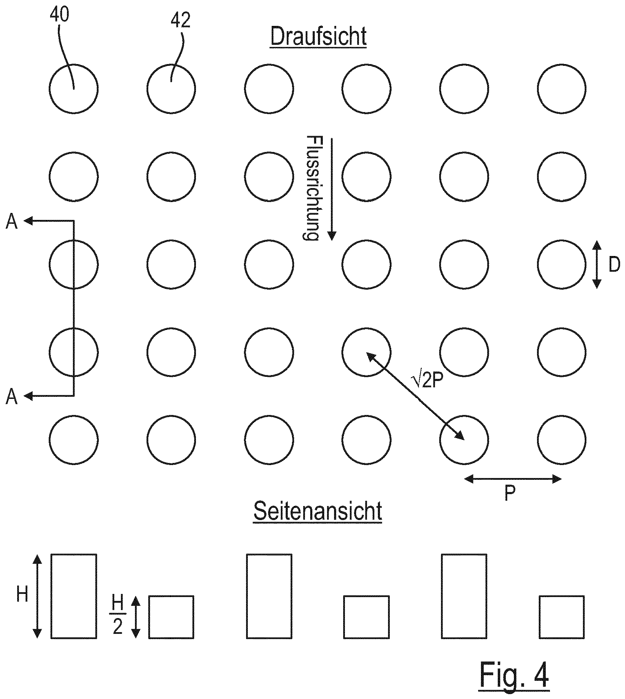

Figur 4 verdeutlicht schematisch den mikroskopischen Aufbau der Struktur eines Reisblatts. Der dadurch auftretende Effekt der Ablagerungsresistenz ist dieser Struktur geschuldet. Dabei sind einzelne Erhebungen 40, 42 auf der Oberfläche aufgebracht. Die kleineren Erhebungen 42 beispielsweise halb so hoch wie die Größeren 40. In Flussrichtung betrachtet, liegen die Erhebungen 40, 42 in Reihen angeordnet nebeneinander, wobei sich immer eine Reihe hoher Erhebungen 40 mit einer mit kleinen Erhebungen 42 abwechselt. Abgesehen von der unterschiedlichen Höhe sind die Erhebungen gleich aufgebaut, so dass der Durchmesser D und die Abstände P zueinander identisch sind.

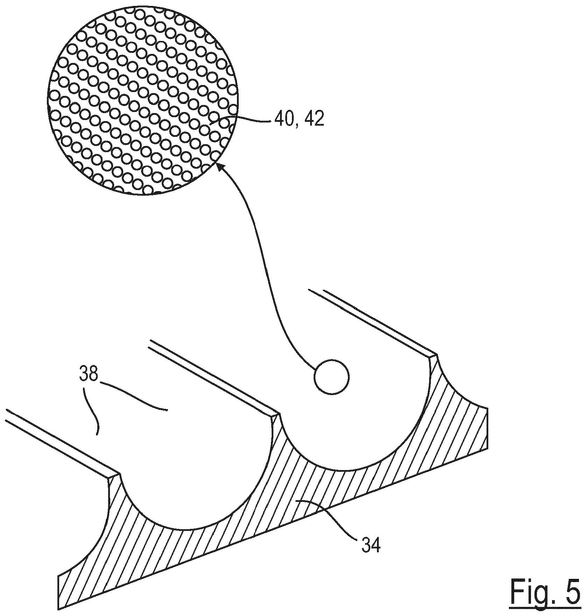

Figur 5 bildet eine Kombination der beiden Figuren 3 und 4. In dieser Darstellung ist die Wellenstruktur 38 des Haihaut-Effektes in Verbindung mit den Erhebungen 40, 42, die für den Reisblatt-Effekt verantwortlich sind, zu sehen. Hierbei ist zu beachten, dass die Darstellung eine einheitliche Höhe der Erhebungen aufweist. Eine Variante mit den zuvor beschriebenen unterschiedlich hohen Erhebungen ist nicht gezeigt.

Es zeigte sich, dass die vorbeschriebenen Beschichtungen oder Strukturierungen des Reflektors 28 geeignet sind, im Gebrauch Ablagerung zu vermeiden oder zumindest das Entstehen von Ablagerungen zu erschweren.

Offenbart ist ein Durchflussmesser mit zumindest zwei zu einander beabstandeten Mess-Sensoren, vorzugsweise Ultraschall-Sensoren, deren Messsignale von einem ablagerungsresistenten Reflektor reflektiert wird.

### Bezugszeichenliste:

- 1: Durchflussmesser
- 2: Koppelstück
- 4: Koppelstück
- 6: Sensor
- 8: Sensor
- 10: Ausnehmung
- 12: Koppelfläche
- 14: Querwandung
- 16: Seitenwandung
- 18: Messkanal
- 20: Rohrstück
- 22: Flansch
- 24: Querwandung
- 26: Tasche
- 28: Reflektor
- 30: Grundfläche
- 32: Oberflächenschicht
- 34: Grundfläche
- 36: Mikro- Längsrillen
- 38: Wellenstruktur
- 40: große Erhebung
- 42: kleine Erhebung

## Patentansprüche

1. Durchflussmesser, der über einen an eine von einem Fluid durchströmten Rohrleitung einsetzbaren Messkanal (18) verfügt, in dem zumindest zwei Ultraschallsensoren (6, 8) angeordnet sind, wobei ein Reflektor (28) an einer den Ultraschallsensoren (6, 8) entfernten Querwandung (24) des Messkanals (18) angeordnet ist, wobei der Reflektor (28) eine ablagerungsresistente Oberflächenstruktur aufweist, **dadurch gekennzeichnet, dass** die Ablagerungsresistenz des Reflektors (28) durch eine bionische Struktur erreicht wird.

2. Durchflussmesser nach Anspruch 1, wobei die bionische Struktur einen Haifischhaut-Effekt aufweist.

3. Durchflussmesser nach Anspruch 1, wobei die bionische Struktur einen Lotus-Effekt aufweist.

4. Durchflussmesser nach Anspruch 1, wobei die bionische Struktur einen Reisblatt-Effekt aufweist.

5. Durchflussmesser nach Anspruch 1, wobei die bionische Struktur eine Kombination aus Haifischhaut- und/oder Lotus- und/oder Reisblatt-Effekt aufweist.

6. Durchflussmesser nach einem der vorgehenden Ansprüche, wobei der Messkanal (18) eine Ovalform aufweist.

7. Durchflussmesser nach einem der vorhergehenden Ansprüche, wobei der Reflektor (28) bündig in den Messkanal (18) eingesetzt ist und/oder in einer Tasche (26) des Messkanals eingesetzt ist.

## Claims

1. A flow meter comprising a measuring channel (18) adapted to be inserted in a pipe through which fluid is flowing, in which measuring channel at least two ultrasonic sensors (6, 8) are arranged, wherein a reflector (28) is arranged at a transverse wall (24) of the measuring channel (18) remote from the ultrasonic sensors (6, 8), the reflector (28) having a deposition-resistant surface structure, **characterized in that** resistance to deposition of the reflector (28) is achieved through a bionic structure.

2. The flow meter according to claim 1, wherein the bionic structure has a sharkskin effect.

3. The flow meter according to claim 1, wherein the bionic structure has a lotus effect.

4. The flow meter according to claim 1, wherein the bionic structure has a rice leaf effect.

5. The flow meter according to claim 1, wherein the bionic structure has a combination of sharkskin and/or lotus and/or rice leaf effect.

6. The flow meter according to any one of the preceding claims, wherein the measuring channel (18) has an oval shape.

7. The flow meter according to any one of the preceding claims, wherein the reflector (28) is inserted to be flush with the measuring channel (18) and/or is inserted in a pocket (26) of the measuring channel.

## Revendications

1. Débitmètre, disposant d'un canal de mesure (18) ajustable à une conduite parcourue par un fluide, au moins deux capteurs à ultrasons (6, 8) étant disposés dans ce canal, dans lequel un réflecteur (28) est disposé sur une paroi transversale (24) du canal de mesure (18) éloignée des capteurs à ultrasons (6, 8), dans lequel le réflecteur (28) comporte une structure de surface résistante à l'encrassement, **caractérisé en ce que** la résistance à l'encrassement du réflecteur (28) est atteinte par une structure bionique.

2. Débitmètre selon la revendication 1, dans lequel la structure bionique comporte un effet peau de requin.

3. Débitmètre selon la revendication 1, dans lequel la structure bionique comporte un effet lotus.

4. Débitmètre selon la revendication 1, dans lequel la structure bionique comporte un effet feuille de riz.

5. Débitmètre selon la revendication 1, dans lequel la structure bionique comporte une combinaison d'effet peau de requin et/ou d'effet lotus et/ou d'effet feuille de riz.

6. Débitmètre selon l'une des revendications précédentes, dans lequel le canal de mesure (18) comporte une forme ovale.

7. Débitmètre selon l'une des revendications précédentes, dans lequel le réflecteur (28) est ajusté en affleurement dans le canal de mesure (18) et/ou est ajusté dans une poche (26) du canal de mesure.
